(19) Europäisches Patentamt
European Patent Office
Office européen des brevets

(11) **EP 2 666 011 B1**

(12) **EUROPÄISCHE PATENTSCHRIFT**

(45) Veröffentlichungstag und Bekanntmachung des Hinweises auf die Patenterteilung:
**15.10.2014 Patentblatt 2014/42**

(21) Anmeldenummer: **12705233.0**

(22) Anmeldetag: **18.01.2012**

(51) Int Cl.:
***G01N 27/18*** *(2006.01)*

(86) Internationale Anmeldenummer:
**PCT/EP2012/050677**

(87) Internationale Veröffentlichungsnummer:
**WO 2012/098138 (26.07.2012 Gazette 2012/30)**

(54) **MESSANORDNUNG MIT IN GASWEGEN ANGEORDNETEN ELEKTRISCH BEHEIZTEN WIDERSTÄNDEN**

MEASUREMENT ARRANGEMENT WITH ELECTRICALLY HEATED RESISTORS ARRANGED IN GAS PATHS

DISPOSITIF DE MESURE DOTÉ DE RÉSISTANCES CHAUFFÉES ÉLECTRIQUEMENT, DISPOSÉES DANS DES PARCOURS DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.01.2011 DE 102011002947**

(43) Veröffentlichungstag der Anmeldung:
**27.11.2013 Patentblatt 2013/48**

(73) Patentinhaber: **Siemens Aktiengesellschaft**
**80333 München (DE)**

(72) Erfinder:
• PROBST, Frank
**76863 Herxheim bei Landau/Pfalz (DE)**
• **RICHTER, Josef**
**76185 Karlsruhe (DE)**

(56) Entgegenhaltungen:
DE-A1-102009 014 618    US-A1- 2008 291 966
US-B2- 6 928 858    US-B2- 7 555 944

• CRUZ ET AL: "Microfabricated thermal conductivity detector for the micro-ChemLab (TM)", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 121, Nr. 2, 3. Februar 2007 (2007-02-03), Seiten 414-422, XP005872220, ISSN: 0925-4005, DOI: 10.1016/J.SNB.2006.04.107

**Beschreibung**

Die Erfindung betrifft eine Messanordnung mit in Gaswegen angeordneten elektrisch beheizten Widerständen.

Aus der DE 10 2009 014 618 A1 ist ein Wärmeleitfähigkeitsdetektor für die Gasanalyse bekannt, bei zwei elektrisch beheizbare Heizfäden aus Gold oder Platin hintereinander in der Mitte eines Kanals von einem Gas umströmbar gelagert sind und dazu an ihren Enden jeweils an einem den Kanal durchquerenden elektrisch leitenden Träger gehalten ist. In der Praxis werden die vier Heizfäden von zwei solchen Wärmeleitfähigkeitsdetektoren zu einer Wheatstone-Brücke verschaltet, wobei der eine Wärmeleitfähigkeitsdetektor mit einem Messgas und der andere mit einem Vergleichs- oder Nullgas beströmt wird und die von jeweils demselben Gas umströmten Heizfäden in der Wheatstone-Brücke einander diagonal gegenüber liegen.

Aus der WO 2009/153099 A1 ist ein Mikroströmungsfühler, ebenfalls für die Gasanalyse, bekannt, bei dem zwei elektrisch beheizbare Gitter hintereinander in einem Gasweg angeordnet sind. Die Gitter können aus Silizium oder Metall bestehen und sind zusammen mit Ergänzungswiderständen zu einer Wheatstone-Brücke verschaltet. Die Ergänzungswiderstände können von den Gittern eines weiteren Mikroströmungsfühlers gebildet werden.

Bei einer aus der DE 102 30 198 A1 bekannten Messanordnung sind zwei elektrisch beheizte Widerstände zusammen mit zwei Ergänzungswiderständen in einer Wheatstone-Brücke verschaltet sind, wobei die elektrisch beheizten Widerstände einander diagonal gegenüber liegen und einer der Ergänzungswiderstände zum Abgleich der Brücke veränderbar ist. Zur Eliminierung von Offsetspannungen und langsamen Signaldriften aufgrund von Temperaturänderungen wird die an der Brücke erfasste Messspannung bandpassgefiltert.

Die EP 0 348 245 A2 zeigt eine Messanordnung mit einem fremdbeheizten Temperaturmesswiderstand und drei Ergänzungswiderständen in einer Wheatstone-Brücke, wobei einer der Ergänzungswiderstände zum Abgleich der Brücke veränderbar ist.

Aus der DE 14 73 303 A ist eine Messanordnung mit zwei Heizwiderständen zur Beheizung einer Messsubstanz und einer Referenzsubstanz bekannt. Die Wärmeaufnahme der jeweiligen Substanz wird mittels zweier Temperaturmesswiderstände in einer Wheatstone-Brücke erfasst. Mit der an der Brücke erfassten Messspannung wird die Energiezufuhr für die Heizwiderstände geregelt.

CRUZ ET AL: "Microfabricated thermal conductivity detector for the micro-ChemLab(TM)", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 121, Nr. 2, 3. Februar 2007 (2007-02-03), Seiten 414-422, offenbart eine Messanordnung mit vier elektrisch beheizten Widerständen, die in Gaswegen angeordnet und zu einer Wheatstone-Brücke verschaltet sind, wobei jeweils zwei in der Wheatstone-Brücke einander diagonal gegenüber liegende Widerstände in einem Bauteil enthalten sind.

Für die Messgenauigkeit ist es wichtig, dass das Verhältnis der Widerstandswerte der Widerstände in jeder der beiden Brückenhälften gleich ist. Ansonsten ist die Brücke verstimmt. Jedoch sind mikromechanische Messanordnungen wie der bekannte Wärmeleitfähigkeitsdetektor oder Mikroströmungsfühler in der Fertigung schwer zu beherrschen. Die Auswahl passender Widerstände ist durch Fertigungsschwankungen und, bedingt durch Fertigungs-Chargengrößen, vergleichsweise geringe Auswahlmengen eingeschränkt.

Insbesondere erweist sich als problematisch, dass sich die vier Widerstände der Brücke mit der Zeit mehr oder weniger stark verändern können. Zusätzlich laufen die Veränderungen, zumindest am Anfang, noch in zufällige Richtungen. D. h. die Werte mancher Widerstände nehmen in den ersten Betriebstagen oder -wochen ab, andere hingegen zu. Nach einer vergleichsweise langen Einlaufzeit beginnen dann die Werte aller Widerstände sehr langsam aber monoton zu steigen, bis diese am Ende ihrer Lebensdauer zerstört sind. Die anfänglichen Veränderungen sind in ihrer Richtung nicht vorhersagbar und können daher im Einzelfall zu einer großen und sehr lange anhaltenden Verstimmung der Brücke führen, auch wenn diese aus mit einem hohen Aufwand selektierten Elementen besteht.

Der Erfindung liegt daher die Aufgabe zugrunde, eine Kompensation dieser langsamen Verstimmung der Brücke und im Weiteren deutlich größere Schwankungsbreiten bei der Selektion der Widerstände oder sogar einen Verzicht der Selektion zu ermöglichen.

Gemäß der Erfindung wird die Aufgabe durch die in Anspruch 1 angegebene Messanordnung gelöst.

Gegenstand der Erfindung ist somit eine Messanordnung mit vier elektrisch beheizten Widerständen, die in Gaswegen angeordnet und zu einer Wheatstone-Brücke verschaltet sind, wobei jeweils zwei in der Wheatstone-Brücke einander diagonal gegenüber liegende Widerstände in einem Bauteil enthalten sind, beide Bauteile auf einem gemeinsamen beheizten Träger angeordnet sind, jedem der beiden Bauteile jeweils ein Heizwiderstand zugeordnet ist, die beiden Bauteile zwischen den Heizwiderständen liegend zusammen mit den ihnen jeweils zugeordneten Heizwiderständen zueinander spiegelsymmetrisch auf dem Träger angeordnet sind, und wobei durch unterschiedliche Bestromung der Heizwiderstände eine Verstimmung der Wheatstone-Brücke kompensiert wird.

Ausgehend von dem über den beheizten Träger eingestellten und konstant gehaltenen Temperaturniveau der Brückenschaltung wird bei einer Verstimmung der Brücke je nach Richtung der Verstimmung entweder der eine oder der andere Heizwiderstand bestromt, um das Temperaturniveau im Bereich des zugeordneten Bauteils mit den darin enthaltenen und in der Brücke einander diagonal gegenüber liegenden Widerständen anzuheben. Es hat sich gezeigt, dass sich praxisübliche Verstimmungen der Brücke von unter einem Prozent mit einem Temperaturunterschied von nur wenigen Kelvin zwischen den Bauteilen vollständig kompensieren lassen, so dass als Heizwiderstände handelsübliche SMD-Widerstände verwendet werden können und die erforderliche Heizleistung gering ist.

Da die beiden Bauteile zusammen mit den zugeordneten Heizwiderständen zueinander spiegelsymmetrisch, vorzugsweise auch punktsymmetrisch auf dem Träger angeordnet sind, kann die Kompensation der Verstimmung für beide Richtung übereinstimmend dimensioniert werden.

Bei den Bauteilen mit den darin enthaltenen elektrisch beheizten Widerständen handelt es sich vorzugsweise um Wärmeleitfähigkeitsdetektoren oder Mikroströmungsfühler.

Im Weiteren wird die erfindungsgemäße Messanordnung anhand eines in den Figuren der Zeichnung gezeigten Ausführungsbeispiels erläutert; im Einzelnen zeigen:

Figur 1     eine Draufsicht auf die Messanordnung in Form einer Wärmeleitfähigkeitsdetektor (WLD)-Anordnung mit vier elektrisch beheizbaren Widerständen und

Figur 2     die Verschaltung der Widerstände zu einer Wheatstone-Brücke.

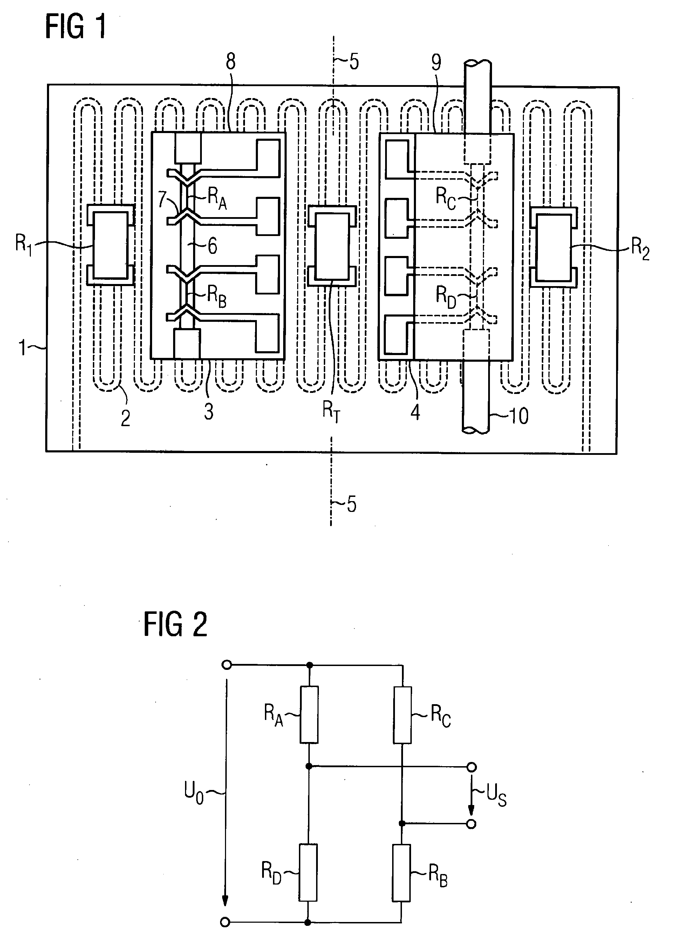

Figur 1 zeigt einen plattenförmigen Träger 1 mit einer darin oder auf der Unterseite ausgebildeten elektrisch betriebenen Flächenheizung 2 in Form einer Heizschlange. Auf der Oberseite des Trägers 1 sind zwei mikromechanisch gefertigte Bauteile (WLD-Chips) 3 und 4, zwei Heizwiderstände $R_1$ und $R_2$ und ein Temperaturmesswiderstand $R_T$ angeordnet. Der Heizwiderstand $R_1$ ist in der Nähe des WLD-Chips 3 und der Heizwiderstand $R_2$ in der Nähe des WLD-Chips 4 angeordnet. Der WLD-Chip 3 und der Heizwiderstand $R_1$ liegen spiegel- und punktsymmetrisch zu dem WLD-Chip 4 und dem Heizwiderstand $R_2$, wobei die Spiegelachse 5 in der Mitte des Trägers 1 und der Flächenheizung 2 verläuft und der Temperaturmesswiderstand $R_T$ auf der Spiegelachse 5 mittig zwischen den WLD-Chips 3, 4 bzw. den Heizwiderständen $R_1$, $R_2$ liegt.

Die beiden WLD-Chips 3 und 4 sind identisch aufgebaut und enthalten jeweils einen Gasweg 6, in dessen Mitte hintereinander zwei elektrisch beheizbare Widerstände (Heizfäden) $R_A$, $R_B$ bzw. $R_C$, $R_D$ jeweils zwischen zwei den Gasweg 6 durchquerenden elektrisch leitenden Trägern 7 gehalten sind. Der Gasweg 6 in dem einen WLD-Chip, z. B. 3, wird von einem Messgas und der des anderen Bauteils, z. B. 4, von einem Vergleichsgas durchströmt. Jeder WLD-Chip 3, 4 besteht aus einer unteren Trägerplatte 8 und einer oberen Trägerplatte 9, zwischen denen der Gasweg 6, die Träger 7 und die Widerstände $R_A$, $R_B$ bzw. $R_C$, $R_D$ ausgebildet bzw. angeordnet sind. Zur besseren Veranschaulichung ist bei dem WLD-Chip 3 die obere Trägerplatte entfernt. Die Gase werden über Kapillaren 10 (nur bei WLD-Chip 4 gezeigt) zu- und abgeführt.

Figur 2 zeigt die Verschaltung der Widerstände $R_A$, $R_B$, $R_C$, $R_D$ zu einer Wheatstone-Brücke, die mit einer Spannung $U_0$ gespeist wird und eine Mess- oder Ausgangsspannung $U_S$ erzeugt. Die Widerstände $R_A$, $R_B$ bzw. $R_C$, $R_D$ jeweils eines WLD-Chips 3 bzw. 4 liegen in der Brücke einander diagonal gegenüber.

Um die Messungen über längere Zeiträume vergleichbar zu halten wird die Wheatstone-Brücke thermostatisiert betrieben, d. h. mittels der Flächenheizung 2, des Temperaturmesswiderstands $R_T$ und einem hier nicht gezeigten Regler werden alle vier Widerstände $R_A$, $R_B$, $R_C$ und $R_D$ auf gleicher Temperatur gehalten. Dadurch und durch geeignete Auswahl der Widerstandswerte von $R_A$, $R_B$, $R_C$ und $R_D$ können durch die Brückenschaltung Störungen aus der Versorgung ($U_0$) und deren Leitungsführung stark unterdrückt werden.

Die Auswahl der Widerstandswerte ist jedoch durch Fertigungsschwankungen und Auswahlmengen (bedingt durch Fertigungs-Chargengrößen) eingeschränkt. In der bisherigen Praxis wurden bei $\pm$ 1,5%-iger Schwankungsbreite zwischen je $R_A/R_C$ und $R_D/R_B$ noch akzeptable Verhältnisse erhalten.

Bei gleichem Messbedingungen an allen Widerständen $R_A$, $R_B$, $R_C$ und $R_D$ gilt für die Brückenverstimmung: $V = U_S / U_0$.

Diese Brückenverstimmung V lässt sich nun kompensieren (d. h. $U_S$ = 0 V), indem je nach Richtung der Verstimmung zusätzlich zur Flächenheizung 2 entweder der Heizwiderstand $R_1$ den WLD-Chip 3 mit den Widerständen $R_A$, $R_B$ auf eine Temperatur $T_1$ oder der Heizwiderstand $R_2$ den WLD-Chip 3 mit den Widerständen $R_C$, $R_D$ auf eine Temperatur $T_2$ erwärmt.

Die einzelnen Widerstände in der Brücke gehorchen folgender Temperaturabhängigkeit:

$$R_{A,B} = R_{20A,B} \; (1 \; + \; \alpha \; \Delta T_1)$$

und

$$R_{C,D} = R_{20C,D} \ (1 + \alpha \ \Delta T_2),$$

wobei $R_{20}$ den Widerstandswert bei 20 °C, $\alpha$ den materialabhängigen Temperaturkoeffizient und $\Delta T = T - 20$ °C den Temperaturunterschied des Widerstands gegenüber 20 °C bezeichnen.

Aufgrund der Temperierung durch die Flächenheizung 2 gilt:

$$\Delta T_{1,2} = T_{1,2} - 20 \ ^\circ C = (T_{FH} - 20 \ ^\circ C) + (T_{1,2} - T_{FH}),$$

d. h., die Heizleistung für den Heizwiderstand $R_1$ bzw. $R_2$ muss lediglich eine Temperaturerhöhung gegenüber der Temperatur $\Delta T_{FH}$ der Flächenheizung 2 erbringen.

Die Verstimmung der Brücke ermittelt sich nun zu:

$$V = \frac{R_B}{R_B + R_C} - \frac{R_D}{R_A + R_D}$$

$$= \frac{R_{20B}(1 + \alpha\Delta T_1)}{R_{20B}(1 + \alpha\Delta T_1) + R_{20C}(1 + \alpha\Delta T_2)} - \frac{R_{20D}(1 + \alpha\Delta T_2)}{R_{20A}(1 + \alpha\Delta T_1) + R_{20D}(1 + \alpha\Delta T_2)}.$$

Unter der Annahme, dass $\alpha\Delta_{1,2} \ll 1$ ist, vereinfacht sich der Ausdruck zu:

$$V = \frac{R_{20B}(1 + \alpha\Delta T_1)}{R_{20B} + R_{20C}} - \frac{R_{20D}(1 + \alpha\Delta T_2)}{R_{20A} + R_{20D}}.$$

Weiterhin kann angenommen werden, dass alle vier Kaltwiderstände sehr ähnlich sind, d. h: $R_{20A} \approx R_{20B} \approx R_{20C} \approx R_{20D}$. Dies vereinfacht den Ausdruck nochmals zu:

$$V = \frac{\alpha}{2}\left(\Delta T_1 - \Delta T_2\right).$$

Berücksichtigt man nun wieder eine unvermeidliche Grundverstimmung $V_0$ der Brücke und versucht diese zu kompensieren, so ergibt sich:

$$V = V_0 + \frac{\alpha}{2}\left(\Delta T_1 - \Delta T_2\right) = 0 \Rightarrow \Delta T_1 - \Delta T_2 = \frac{2V_0}{\alpha}.$$

Man muss also lediglich je nach Richtung der Verstimmung $V_0$ den Heizwiderstand $R_1$ oder $R_2$ soweit bestromen, dass dessen Leistung ein $\Delta T = (\Delta T_1 - \Delta T_2)$ ergibt, das sich mit $2V_0/\alpha$ die Waage hält.

Bei praxisüblichen Verstimmungen von $V_0 = \pm 0,5$ % und einem Temperaturkoeffizienten $\alpha = 4 \cdot 10^{-3}$ K$^{-1}$ ergibt sich eine vollständige Kompensation mit $\Delta T = 2,5$ K. Diese 2,5 K sind mit geringen elektrischen Leistungen erzielbar, so dass hier handelsübliche SMD-Widerstände für $R_1$ und $R_2$ ausreichen.

Im Einzelnen ergeben sich folgende Vorteile:

Mit der Reduzierung der Verstimmung V steigt gleichzeitig die Störunterdrückung S = (1 - V) der Messbrücke stark an. Dadurch wird bei Verwendung der WLD-Anordnung in einem Gasanalysator, wie z. B. Gaschromatographen, die Nachweisgrenze verbessert.

Über ein regelmäßiges, automatisches Nachjustieren können Alterungseffekte der WLD-Brücke weitestgehend ausgeglichen werden.

Eine Vorselektierung und Paarung geeigneter WLD-Chips kann entfallen bzw. stark vereinfacht werden.

Alternativ kann eine deutlich breitere Wertemenge von WLD-Chips verwendet werden, was die Ausbeute in der WLD Fertigung erhöht.

**Patentansprüche**

1. Messanordnung mit vier elektrisch beheizten Widerständen ($R_A$, $R_B$, $R_C$, $R_D$), die in Gaswegen (6) angeordnet und zu einer Wheatstone-Brücke verschaltet sind, wobei jeweils zwei in der Wheatstone-Brücke einander diagonal gegenüber liegende Widerstände ($R_A$, $R_B$; $R_C$, $R_D$) in einem Bauteil (3, 4) enthalten sind, beide Bauteile (3, 4) auf einem gemeinsamen beheizten Träger (1) angeordnet sind, jedem der beiden Bauteile (3, 4) jeweils ein Heizwiderstand ($R_1$, $R_2$) zugeordnet ist, die beiden Bauteile (3, 4) zwischen den Heizwiderständen ($R_1$, $R_2$) liegend zusammen mit den ihnen jeweils zugeordneten Heizwiderständen ($R_1$, $R_2$) zueinander spiegelsymmetrisch auf dem Träger (1) angeordnet sind, und wobei durch unterschiedliche Bestromung der Heizwiderstände ($R_1$, $R_2$) eine Verstimmung der Wheatstone-Brücke kompensiert wird.

2. Messanordnung nach Anspruch 1, **dadurch gekennzeichnet, dass** die beiden Bauteile (3, 4) zusammen mit den zugeordneten Heizwiderständen ($R_1$, $R_2$) zueinander punktsymmetrisch auf dem Träger angeordnet (1) sind.

3. Messanordnung nach Anspruch 1 oder 2, **dadurch gekennzeichnet, dass** die Bauteile (3; 4) mit den darin enthaltenen elektrisch beheizten Widerständen ($R_A$, $R_B$; $R_C$, $R_D$) als Wärmeleitfähigkeitsdetektoren ausgebildet sind.

4. Messanordnung nach Anspruch 1 oder 2, **dadurch gekennzeichnet, dass** die Bauteile mit den darin enthaltenen elektrisch beheizten Widerständen als Mikroströmungsfühler ausgebildet sind.

**Claims**

1. Measurement arrangement having four electrically heated resistors ($R_A$, $R_B$, $R_C$, $R_D$) are arranged in gas paths (6) and are connected to a Wheatstone bridge, wherein in each case two resistors ($R_A$, $R_B$; $R_C$, $R_D$) that lie diagonally opposite each other in the Wheatstone bridge are contained in one component (3, 4), two components (3, 4) are arranged on a common heated carrier (1), a heating resistor ($R_1$, $R_2$) is allocated in each case to each of the two components (3, 4), the two components (3, 4) are arranged between the heating resistors ($R_1$, $R_2$) lying together with their respective allocated heating resistors ($R_1$, $R_2$) in a mirror symmetrical manner with respect to each other on the carrier (1) and wherein an imbalance of the Wheatstone bridge is compensated for by different currents flowing through the heating resistors ($R_1$, $R_2$).

2. Measurement arrangement as claimed in Claim 1, **characterized in that** the two components (3, 4) together with the allocated heating resistors ($R_1$, $R_2$) are arranged in a mutually spot-symmetrical manner on the carrier (1).

3. Measurement arrangement as claimed in Claim 1 or 2, **characterized in that** the components (3; 4) with the electrically heated resistors ($R_A$, $R_B$; $R_C$, $R_D$) contained therein are embodied as heat-conducting detectors.

4. Measurement arrangement as claimed in Claim 1 or 2, **characterized in that** the components with the electrically heated resistors contained therein are embodied as microflow sensors.

**Revendications**

1. Agencement de mesure ayant quatre résistances ($R_A$, $R_B$, $R_C$, $R_D$), qui sont chauffées électriquement, qui sont disposées dans des trajets ( 6 ) de gaz et qui sont câblées en un pont de Wheatstone, respectivement deux résistances ( $R_A$, $R_B$; $R_C$, $R_D$ ) opposées l'une à l'autre en diagonale du pont de Wheatstone étant contenues dans un composant ( 3, 4 ), les deux composants ( 3, 4 ) étant disposés sur un support ( 1 ) chauffé commun, à chacun des deux composants ( 3, 4 ) est associée respectivement une résistance ( $R_1$, $R_2$ ) de chauffage, les deux composants ( 3, 4 ) sont, en se trouvant entre les résistances ( $R_1$, $R_2$ ) de chauffage ensemble avec les résistances ( $R_1$, $R_2$ ) de chauffage qui leur sont associées respectivement, disposés sur le support symétriquement comme dans un miroir l'un de l'autre et, par une alimentation en courant différente des résistances ( $R_1$, $R_2$ ) de chauffage, un désaccord du pont de Wheatstone est compensé.

2. Agencement de mesure suivant la revendication 1, **caractérisé en ce que** les deux composants ( 3, 4 ), ensemble avec les résistances ( $R_1$, $R_2$ ) de chauffage qui leur sont associées, sont disposés ( 1 ) sur le support en étant symétriques l'un de l'autre par rapport à un point.

3. Agencement de mesure suivant la revendication 1 ou 2, **caractérisé en ce que** les composants ( 3, 4 ), avec les résistances ( $R_A$, $R_B$; $R_C$, $R_D$ ) chauffées électriquement qui y sont contenues, sont constitués sous la forme de détecteurs de conductibilité de la chaleur.

4. Agencement de mesure suivant la revendication 1 ou 2, **caractérisé en ce que** les composants, avec les résistances chauffées électriquement qui y sont contenues, sont constitués sous la forme de sondes de microcourant.

## FIG 1

## FIG 2

## IN DER BESCHREIBUNG AUFGEFÜHRTE DOKUMENTE

### In der Beschreibung aufgeführte Patentdokumente

- DE 102009014618 A1
- WO 2009153099 A1
- DE 10230198 A1
- EP 0348245 A2
- DE 1473303 A

### In der Beschreibung aufgeführte Nicht-Patentliteratur

- Microfabricated thermal conductivity detector for the micro-ChemLab(TM). **CRUZ et al.** SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS. ELSEVIER S.A, 03. Februar 2007, vol. 121, 414-422